# FASCICULE DE BREVET EUROPEEN

(11) **EP 3 258 780 B1**
(45) Date de publication et mention de la délivrance du brevet: **02.09.2026**
(21) Numéro de dépôt: 16704846.1
(22) Date de dépôt: 17.02.2016
(51) Int. Cl.: A01N 25/28, A01N 37/06, A01P 17/00, A01P 19/00

(54) **PARTICULES CONTENANT DES PHEROMONES ET PROCEDE DE FABRICATION**
PHEROMONE ENTHALTENDE PARTIKEL UND HERSTELLUNGSVERFAHREN
PARTICLES CONTAINING PHEROMONES AND PRODUCTION PROCESS

(30) Priorité: 18.02.2015 FR 1551374
(43) Date de publication de la demande: 27.12.2017
(73) Titulaire: Melchior Material and Life Science France, 64170 Lacq (FR)
(72) Inventeur: GUERRET, Olivier, 46170 Pern (FR); DUFOUR, Samuel, 64300 Orthez (FR)
(74) Mandataire: Regimbeau
(86) Numéro de dépôt international: PCT/EP2016/053385
(87) Numéro de publication internationale: WO 2016/131883

(56) Documents cités:
- WO-A1-00/48465
- WO-A1-2009/007810
- WO-A1-2014/096622
- WO-A1-99/56541
- WO-A2-2012/095444

## Description

La présente invention concerne la fabrication et l'utilisation de microparticules faiblement chargées contenant des phéromones à chaines grasses, telles que les phéromones de lépidoptères et qui sont capables de relarguer les phéromones de manière prolongée. Ces microparticules ont de plus la particularité d'être composées à plus de 97% en poids de produits naturels et biodégradables et fabriquées selon un procédé respectueux de l'environnement.

### Art antérieur

L'utilisation de phéromones pour le contrôle des populations d'insectes ravageurs de récoltes est bien connue de l'homme du métier. Les invasions d'insectes intervenant plusieurs fois sur une saison, il faut résoudre le problème de la diffusion, pendant toute la saison, d'une quantité suffisante de phéromone permettant soit de guider les insectes vers un piège à insecte soit de saturer les antennes des insectes qui permettent normalement à un mâle de retrouver des femelles (ou le contraire), (Behavior-modifying chemicals for insect management : applications of pheromones and other attractants, Chpter 4 edited by Richard L. Ridgway, Robert M. Silverstein, May N. Inscoe) ou (Mechanisms of communication disruption by pheromone in the control of Lepidoptera: a review, 1982; physiological Entomology Volume 7, Issue 4, pages 353-364).

Les techniques de diffusion sont variées. Citons par exemple des bouteilles à mèche telle que celles vendues sous les marques Rhyncotrak^{™}, ou Rhyncopro^{™}, des plastiques (Cosmotrack^{™}) ou des gels imbibés de la substance contenant les phéromones (par exemple US 20110014257, ou US 8828374 B2), des capsules en plastique poreuses (produits de BASF par exemple vendu sous la marque Rak) ou des technologies de vaporisateurs programmables (US 2008/0184614, ou marque Checkmate^{™}). Ces techniques, pour intéressantes qu'elles soient, présentent de nombreux défauts dont leur coût de mise en œuvre (qui comprend la pose et la dépose des diffuseurs) ou leur coût de fabrication. Par ailleurs la stabilité de certains de ces systèmes sur la durée des traitements des cultures est aussi un facteur limitant.

Les conséquences de ces défauts sont importantes puisqu'elles obèrent le développement de la technologie de traitement des cultures à base de phéromone : même si le bilan écologique d'un traitement à base de phéromones est très positif, un prix trop élevé par rapport à des produits phytosanitaires classiques ou une difficulté d'application trop grande pour une culture donnée empêchent l'adoption de la solution phéromone pour le traitement des cultures.

Une solution pour améliorer la maniabilité et l'efficacité des systèmes de relargage des phéromones consiste à encapsuler ces phéromones (ou le mélange phéromonal) dans des particules plus ou moins fines que l'on pourra ensuite disperser dans un solvant vecteur (le plus souvent l'eau). Des travaux antérieurs ont décrit des technologies d'encapsulation de phéromone.

On peut classer ces technologies en grandes catégories :

### 1) Les technologies de coacervation :

Selon ce principe, la phéromone est solubilisée dans un solvant et ce mélange est émulsionné pour obtenir des gouttelettes. On trouvera un exemple récent de ce genre dans technologie dans l'article de Gu & al (Journal of Microencapsulation, 2010, 27 (4), 355-364) ou (X. Zheng & al Biomed Microdevices (2009), 11, p. 275). La coacervation est classée en coacervation simple ou coacervation complexe en fonction qu'elle implique un ou deux polymères de charges opposées.

La coacervation simple se fait en 4 étapes consistant dans un premier temps à préparer une solution de polymère hydrosoluble à 1 ou 5% dans l'eau, puis à émulsionner la phéromone dans cette solution en présence de tensio-actifs. Dans une troisième étape, l'ajout d'un sel comme le sulfate de sodium sous vive agitation permet la floculation les polymères autour des gouttelettes et enfin la réticulation d'une écorce en ajoutant du formaldéhyde ou du glutaraldéhyde.

La coacervation complexe consiste quant à elle à préparer d'abord une solution aqueuse cationique de polymère dans laquelle on émulsifie la phéromone puis on prépare séparément une solution de polymère anionique à la même concentration que précédemment. Enfin, l'émulsion et la solution sont pompées simultanément dans un réacteur agité ce qui permet de créer une suspension de particules avec une double écorce de polymère (anionique à l'extérieur et cationique en couche interne). Pour améliorer la stabilité des particules une réticulation au formaldéhyde est enfin mise en œuvre.

Dans les deux cas les suspensions de particules doivent être lavées plusieurs fois pour éliminer la phéromone non encapsulée. Cela illustre une première limitation de ces technologies qui n'ont pas un rendement de 100% d'encapsulation, or il est essentiel que toute la phéromone soit encapsulée pour limiter les coûts d'application. Dans ce système, les particules sont donc creuses et lors de leur utilisation en champ, la phéromone est sensée diffuser de manière constante à travers une fine membrane poreuse pendant plusieurs semaines. On observe que cela est difficilement contrôlable par cette technologie, en particulier parce qu'une partie non négligeable de la phéromone est adsorbée en surface des particules et est relarguée immédiatement. Les meilleurs résultats impliquent des quantités importantes de formaldéhyde (ou de glutaraldéhyde) qui sont des composés très toxiques et qui posent des problèmes potentiels de pollution pour appliquer cette technologie dans des cultures alimentaires.

### 2) Les technologies de capsules polymère

Ces technologies sont illustrées par J. De Viegler dans Environmentalist 2008 p. 45 et elles consistent tout d'abord à dissoudre un polymère dans un solvant organique plus volatile que l'eau tel que le dichlorométhane et d'y ajouter la phéromone. La solution obtenue est ensuite émulsifiée dans l'eau puis le solvant est évaporé. La suspension obtenue est ensuite séchée pour obtenir une poudre capable de relarguer des phéromones pendant 25 jours. La difficulté de cette technologie consiste dans le fait que le solvant volatile est nocif pour l'environnement et pour les utilisateurs et que par ailleurs des traces de ce solvant peuvent avoir un effet négatif sur le pouvoir d'attraction des phéromones.

### 3) Les technologies de broyage cryogénique

Ces technologies consistent à broyer un matériau plastique imbibé de phéromone obtenu préalablement soit par polymérisation en présence de phéromone soit par trempage du dit plastique dans un bain de solution de phéromone dans un solvant organique approprié. Pour obtenir une poudre de particules susceptibles de relarguer des phéromones, il convient ensuite de broyer à basse température le matériau. Le coût de cette technologie est élevé.

### 4) Les technologies d'émulsification d'une formulation organique contenant la phéromone

Ces technologies sont illustrées par exemple dans le brevet US 2007/0071786 (pour des applications en film) ou la publication C.A Atterholt & al. journal of Controlled Release, 57 (1999), 223 ou le brevet US 6001346A pour des applications en vaporisateurs). Elles consistent à choisir une cire ayant un point de fusion inférieur à 100°C, et de réaliser un mélange fondu de phéromone et de cire au-dessus de cette température de fusion mais en dessous de 100°C. Par ailleurs, il faut préparer une solution aqueuse de tensioactif dans laquelle on coule la solution organique sous vive agitation. Les tensioactifs utilisés sont du laurate de sorbyl (span 60) ou du stéarate de triéthanol amine, de la cellulose microcristalline ou de la gomme de carraghénane. Seul le stéarate de triéthanolamine est utilisé pour les applications vaporisables, les autres surfactants sont utilisés pour des applications en film. L'intérêt de ces technologies est de montrer des taux de diffusion très contrôlés tout en utilisant un vecteur naturel (la cire).

La limitation de cette technologie réside dans le fait que l'émulsification nécessite une forte agitation nécessitant des agitateurs de type Ultra Turax. Par ailleurs, les émulsions ainsi obtenues sont des mélanges métastables et le mélange paraffine/eau finit par décanter après quelques jours ou quelques mois ce qui rend difficile une exploitation industrielle de ces solutions.

Par ailleurs, des technologies d'encapsulation ont aussi été décrites dans d'autres domaines que les phéromones. Le document WO 2008/146119 (Coatex) décrit l'utilisation d'émulsions de type HASE, pour piéger des molécules odorantes en jouant sur le pH du mélange.

Egalement, le document WO 2014/96622 (Coatex) décrit l'utilisation d'un copolymère acrylique de type HASE et d'au moins un matériau à changement de phase solide-liquide présentant une température de transition de phase variant de 20 à 90°C pour préparer des microcapsules polymériques d'un agent actif, la présence d'un matériau à changement de phase permettant d'améliorer la résistance mécanique des microcapsules. Bien qu'étant adapté à un certain nombre de domaine d'application, les microparticules obtenues selon les formules décrites dans ce dernier document présentent dans certaines autres applications l'inconvénient d'être trop dures, de se craqueler ou de manquer de souplesse. C'est notamment le cas lorsque les microparticules doivent tenir sur les surfaces sur lesquelles elles sont déposées, par exemple un textile ou une surface rugueuse. En outre le procédé d'encapsulation de principes actifs selon WO2014/96622 vise des principes actifs qui doivent rester dans les capsules et ne pas diffuser. La libération du principe actif se fait par modification du pH, de la température ou par altération mécanique de l'enveloppe. Il faut réaliser une modification ou altération de l'enveloppe pour que le principe actif soit libéré et cette libération ne se fait pas de manière passive et progressive sans intervention extérieure.

Le document WO2012095444 décrit un procédé d'encapsulation via une polymérisation radicalaire qui fait polymériser un acrylate qui est dissous dans une huile. La mise en œuvre d'agent radicalaire qui constitue un agent initiateur d'oxydation pour les principes actifs et est donc à proscrire. En effet, différents principes actifs, et en particulier les phéromones, sont constitués de chaines grasses comprenant au moins une insaturation et il convient de les protéger de l'oxydation. La mise en œuvre d'agent de polymérisation radicalaire entraîne une oxydation et une dégradation de ces composés sensibles. En outre le processus de polymérisation décrit dans WO2012095444 ne peut en aucun cas conduire à une structure coeur-enveloppe car la polymérisation se fait via l'agent radicalaire qui diffuse de l'extérieur vers le cœur de la particule et créée ainsi un gradient de polymérisation mais pas un structure cœur-enveloppe.

Par ailleurs, les microparticules de l'art antérieur ne permettent pas d'encapsuler certains principes actifs.

Ainsi il ressort de l'art antérieur un besoin en la fourniture d'un procédé de fabrication de particules contenant un principe actif, en particulier un principe actif sensible à l'oxydation, plus particulièrement une phéromone ; qui est un procédé doux permettant de préserver ladite phéromone de l'oxydation et de la dégradation et son relargage progressif et passif sans intervention extérieure.

### Description de l'invention

### Définitions préalables :

ASE : (Alkali swellable emulsion) sont des copolymères d'acide (méth)acrylique et d'acrylate d'alkyle fabriqués par polymérisation radicalaire en émulsion qui ont la propriété lors de leur neutralisation par une base telle que la soude ou l'ammoniac de devenir hydrosolubles et de modifier la rhéologie de l'eau.

HASE : (hydrophobically modified alkali swellable emulsion) sont des copolymères obtenus comme les ASE mais dont la composition comporte en plus des macromonomères hydrophobes de formule générale :

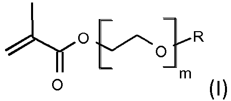

Où m est un entier en général supérieur à 5 et où R est un groupement carboné hydrophobe. Ils présentent aussi la capacité de modifier la rhéologie de la solution aqueuse.

L'objet de l'invention consiste à résoudre les problèmes des produits et procédés de l'art antérieur en utilisant des modifiants de rhéologie tels que les copolymères d'acide (méth)acrylique et d'acrylate d'alkyle pour fabriquer des particules stables en suspension et capables de relarguer des substances sémio-chimiques et en particulier des phéromones, plus particulièrement des phéromones de lépidoptère, plus particulièrement des phéromones à chaine grasse, et plus particulièrement encore des phéromones de lépidoptères à chaine grasse.

Pour cela nous avons trouvé que, de manière surprenante, il était possible de réaliser des particules présentant les avantages de celles obtenues par coacervation (particules avec une enveloppe solide prévenant leur déstabilisation) et les avantages de l'utilisation de mélanges de cire(s) et d'huile(s) pour obtenir des systèmes peu onéreux, biodégradables et composés de produits naturels. La particularité de l'invention réside dans l'utilisation de molécules qui, dans certaines conditions de pH, jouent un rôle tensio-actif et, dans d'autres conditions de pH, se durcissent et deviennent des enveloppes solides des particules.

L'intérêt d'un tel procédé est qu'il est simple à mettre en œuvre et que la taille des particules est ajustable facilement ce qui a un impact sur les cinétiques de relargage des phéromones.

En outre les particules selon l'invention permettent de protéger le principe actif de l'oxydation, et ce en particulier lorsqu'il s'agit d'une phéromone, ainsi que de permettre un relargage contrôlé dudit principe actif qui est contenu dans les particules, et ce plus particulièrement lorsque le principe actif est une phéromone. En effet, dans le cas de la présente invention et contrairement aux techniques de l'art antérieur, l'enc apsulation est effectuée sans agent chimique, sans autre réaction chimique qu'une modification douce du pH de la formulation ce qui induit seulement un réarrangement spatial du copolymère mis en œuvre. Le principe actif est non altéré par le procédé, protégé une fois la particule formée et est ensuite relargué progressivement dans l'environnement comme démontré dans les exemples ci-après.

C'est ainsi un premier objet de l'invention que de fournir des particules comprenant une enveloppe solide entourant un cœur, caractérisées en ce que :
∘ l'enveloppe solide comprend au moins un copolymère acrylique,
∘ le cœur comprend un mélange de cire, d'huile et de phéromone,
∘ le cœur représente 90-99% en poids des particules.

Dans un mode de réalisation particulière le copolymère acrylique de l'enveloppe solide des particules selon l'invention est choisi parmi les copolymères d'acide (méth)acrylique et d'acrylate d'alkyle.

Il pourra s'agir de copolymères de type Alkali Swellable Emulsion (ASE) tels que définis plus avant. Le copolymère acrylique est choisi parmi les HASE (hydrophobically modified alkali swellable emulsion) tels que définis plus avant.

Les copolymères acryliques de type HASE entrant dans la composition des particules de la présente invention résultent de la copolymérisation des monomères décrits ci-dessus. Ils peuvent être préparés selon les méthodes décrites dans WO 2011/104599, WO 2011/104600 et EP1778797.

Des polymères autres que les copolymères acryliques peuvent être envisagés à partir du moment où ils présentent un comportement de type modifiant de rhéologie, à savoir qu'ils jouent le rôle de tensio actif lors du mélange avec la phase grasse et peuvent être floculés par un agent chimique ou une modification du pH du milieu par exemple.

Le copolymère acrylique présente des fonctions carboxylates qui sont neutralisées à un taux compris entre 50 et 100%, de préférence entre 65 et 100% et de manière encore préférentielle entre 75 et 100%.

Le copolymère acrylique est un copolymère de type HASE et est caractérisé en ce qu'il contient :
- Entre 30 et 40 % en poids d'acide méthacrylique,
- Entre 45 et 60 % en poids d'acrylate d'éthyle,
- Entre 5 % et 20 % en poids d'un macromonomère de formule générale (I) :

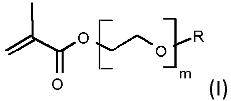

Où m est un entier compris entre 1 et 40, de préférence compris entre 10 et 30 et où R un groupement carboné hydrophobe de formule générale CₙH₂ₙ₊₁ dans lequel n est un entier compris entre 9 et 25, de préférence entre 10 et 20 et encore préférentiellement égal à 12.

Dans un mode de réalisation particulier, les particules selon la présente invention présentent un un cœur composé de
- 10 à 90 % en poids de cire, particulièrement de 60 à 80% en poids de cire,
- 10 à 90% en poids d'huile, particulièrement 8 à 35% en poids d'huile,
- 0.1 à 25 % en poids de phéromone, particulièrement de 0.5 à 20% en poids de phéromone,
- 0 à 0.8% en poids, particulièrement de 0.1 à 0.5% en poids de stabilisant.

Dans la description de la présente invention, l'expression «particules » désigne des particules ayant une taille moyenne variant de 0,2 µm à quelques dizaines de micromètres, tels que de 0,5 à 100 µm, ou de 1 à 70 µm, ou de 1 à 40 µm. Lorsque les particules sont des particules sphériques, la taille moyenne des particules désigne le diamètre moyen des particules. Lorsque les particules ne sont pas sphériques, c'est-à-dire qu'elles présentent une plus longue dimension et une plus courte dimension, la taille moyenne des particules désigne la taille de la plus longue dimension des particules. La taille des particules peut être mesurée selon des méthodes bien connues de l'homme du métier, telles que par granulométrie laser.

Par « cire », on entend au sens de l'invention, un composé lipophile, solide à température ambiante (environ 25 °C) et pression atmosphérique (760 mm Hg),). Les cires susceptibles d'être utilisées dans une composition selon l'invention peuvent être choisies parmi les cires d'origine animale, végétale, minérale ou de synthèse et leurs mélanges. On peut notamment utiliser les cires hydrocarbonées comme la cire d'abeilles, la cire de lanoline, et les cires d'insectes de Chine; la cire de riz, la cire de Carnauba, la cire de Candelila, la cire de jojoba, la cire d'Ouricurry, la cire d'Alfa, la cire de fibres de liège, la cire de canne à sucre, la cire du Japon et la cire de sumac, la cire de montan, les cires microcristallines, les paraffines et l'ozokérite; les cires de polyéthylène, les cires obtenues par la synthèse de Fisher-Tropsch et les copolymères cireux ainsi que leurs esters. On peut aussi citer les cires obtenues par hydrogénation catalytique d'huiles animales ou végétales ayant des chaînes grasses, linéaires ou ramifiées, en C8-C32. Parmi celles-ci, on peut notamment citer l'huile de jojoba hydrogénée, l'huile de tournesol hydrogénée, l'huile de ricin hydrogénée, l'huile de coprah hydrogénée et l'huile de lanoline hydrogénée, le tétrastéarate de di-(triméthylol-1,1,1 propane). On peut également utiliser les cires obtenues par transesterification et hydrogénation d'huiles végétales, telles que l'huile de ricin ou d'olive, comme les cires vendues sous les dénominations de Phytowax ricin 16L64^{®} et 22L73^{®} et Phytowax Olive 18L57 par la société SOPHIM.

Par « huile », on entend un composé non aqueux, non miscible à l'eau, liquide à température ambiante (environ 25 °C) et pression atmosphérique (760 mm de Hg). L'huile selon l'invention pourra être choisie parmi les huiles végétales. De manière particulière l'huile selon l'invention sera choisie dans le groupe constitué par l'huile de tournesol, l'huile d'arachide, l'huile de soja, l'huile de colza, l'huile de maïs, l'huile d'olive, l'huile de raisin, l'huile de noix, l'huile de lin, l'huile de palme, l'huile de coco, l'huile d'argan, l'huile d'avocat, l'huile d'amande, l'huile de noisette, l'huile de pistache, l'huile de riz, l'huile de coton, l'huile de germe de blé, l'huile de sésame, ou leurs mélanges. De préférence, l'huile est choisie en fonction de la culture que l'on veut protéger des insectes ravageurs, en particulier des lépidoptères.

Un stabilisant, ou un mélange de stabilisant, peut être contenu dans le cœur des particules selon l'invention. Le stabilisant pourra être choisi dans le groupe constitué par le n-butyl-4-hydroxybenzoate (BHB), le tocophérol, la ter-butyl-hydroquinone (TBH), le n-propyl-gallate (PG), le t-butyl- hydroxyanisole (BHA), le para méthyl-hydroxy-benzoate (MHB), le N,N diétyl-toluamide (DT), le t-butyl-hydroxy-toluene (BHT) et l'α-thioglycérine (TG), les nitroxides et les alcoxyamines et leurs mélanges. Le ou les stabilisants permettent de préserver le cœur de particules de l'invention de l'oxydation.

Les particules à enveloppe polymérique solide de la présente invention se présentent sous la forme de structures plus ou moins sphériques capables de s'adapter ou d'adhérer au moins en partie aux surfaces qui les reçoivent (par exemple textile , carton, plastique).

Les particules à enveloppe polymérique solide de la présente invention peuvent se présenter sous forme de suspension aqueuse ou elles peuvent se présenter sous forme de particules solides, plus ou moins souples ou rigides en fonction des besoins de l'application.

C'est aussi un objet de la présente invention que de fournir une suspension aqueuse de particules selon l'invention caractérisée en ce qu'elle contient entre 1 et 70% en poids, particulièrement entre 5 et 60% en poids de particules selon l'invention. Le pH d'une suspension selon l'invention est compris entre 2 et 7, plus particulièrement entre 4 et 7..

La ou les phéromones contenue(s) dans les particules selon l'invention sont particulièrement des phéromones d'insectes, plus particulièrement des phéromones d'insectes à chaine grasse. Plus particulièrement il s'agit de phéromones de lépidoptères à chaine grasse. De manière particulière les particules selon l'invention contiennent des phéromones sexuelles de lépidoptères.

Les phéromones sexuelles d'insectes comme les lépidoptères sont caractérisées en ce qu'elles sont composées de mélanges de molécules à chaines grasses insaturées avec des terminaisons alcool, ester ou aldéhyde.

Les lépidoptères sont des insectes a quatre ailes couvertes d'une poussière écailleuse et une trompe roulée en spirale, qui subissent des métamorphoses complètes et dont la larve se nomme *chenille* et la nymphe *chrysalide.*

Comme phéromone contenue dans les particules selon l'invention, on peut citer les pheromones de Tuta absoluta, de *Plodia interpunctella, Plutella xylostella, Gortyna xanthenes, Agrotis spp, par exemple. Plus particulièrement la phéromone peut être un* phéromone sexuelle de l'eudemys de la vigne, ou *Lobesia botrana,* un lépidoptère ravageur de la vigne.

L'ajustement des ratios cire/huile/phéromone dépend de la solubilité des phéromones dans le mélange huile/cire.

Un quatrième objet de l'invention est une suspension aqueuse de particules selon l'invention caractérisée en ce qu'elle contient entre 1 et 70% en poids de particules, particulièrement entre 5 et 60% en poids de particules, plus particulièrement entre 10 et 50% en poids, plus particulièrement encore entre 20 et 50% en poids, et dont le pH est compris entre 2 et 7, de préférence entre 4 et 7.

Un cinquième objet de l'invention est le procédé de préparation d'une suspension de particules selon l'invention comprenant les étapes suivantes :
a) Préparation d'une phase grasse comprenant huile, cire et phéromone, et optionnellement un ou des stabilisants,
b) Chauffage de la phase grasse à une température supérieure au point de fusion de la cire,
c) Préparation d'une solution aqueuse comprenant le polymère acrylique, présentant un pH compris en 7.5 et 10 et chauffée à une température similaire à celle de la phase grasse,
d) Mélange de la phase grasse dans la solution aqueuse pour former une dispersion de gouttelettes de phase grasse dans une phase aqueuse continue,
e) Acidification à un pH compris entre 2 et 7, de préférence entre 4 et 7 afin d'obtenir la solidification du polymère acrylique.

Dans un mode de réalisation particulier du procédé, le pH de la solution aqueuse est ajusté au moyen d'une solution alcaline telle qu'une solution de soude, de potasse, de carbonate de sodium, d'ammoniac.

Dans un mode de réalisation particulier, la phase grasse est chauffée à une température comprise entre 50 et 80°C, supérieure à la température de fusion de la cire.

Dans un mode particulier, l'acidification du mélange selon l' étape e) peut être réalisée à l'aide d'une solution d'acide tel que l'acide chlorhydrique, l'acide phosphorique, l'acide sulfurique, jusqu'à atteindre un pH compris entre 2 et 7 de préférence entre 4 et 7 ce qui permet d'obtenir la suspension fluide de l'invention.

Dans un mode de réalisation particulier du procédé selon l'invention, les particules selon l'invention peuvent être récupérées via une étape supplémentaire de séparation liquide/solide, telle qu'une centrifugation par exemple.

Un sixième objet de l'invention est l'utilisation de particules ou d'une suspension selon l'invention pour réaliser une pulvérisation sur un feuillage.

Un septième objet de l'invention vise un dispositif d'application d'une composition contenant une des particules selon l'invention, de type seringue comprenant un cylindre et un piston, ledit cylindre étant ouvert à une extrémité pour permettre le coulissement du piston et muni d'un orifice à l'autre extrémité permettant le passage de la composition et bloquant le piston. Un tel dispositif peut avantageusement être une seringue pré chargée avec une composition contenant des particules selon l'invention. Un tel dispositif est particulièrement bien adapté à la dépose d'une dose de particules dans ou à la surface d'un support. Un tel dispositif évite ainsi la manipulation de la composition par les mains ou doigts de l'opérateur, ce qui évite ainsi une contamination de la composition.

Un huitième objet de l'invention est l'utilisation des particules ou suspension aqueuse selon l'invention pour leurrer les lépidoptères selon un protocole de piégeage ou selon un protocole de confusion sexuelle. De préférence les cultures protégées par les particules sont la vigne, les grandes cultures (le riz, le maïs, le coton, soja, tournesol par exemple), les cultures maraichères (les tomates, salades, poivrons, melons, concombres, choux ou les épinards par exemple...), et les arbres fruitiers ou d'ornement (les pommiers, les pêchers, les poiriers, les agrumes par exemple), et les forêts telles les forêts de pin ou de chênes par exemple), ou les arbustes ( tels que les buis par exemple).

Dans un autre mode de réalisation, la présente invention vise aussi un procédé de protection d'une parcelle agricole, en particulier une parcelle agricole cultivée, contre les lépidoptères comprenant l'application d'une composition comprenant des particules selon l'invention.

Dans un mode de réalisation particulier, la parcelle agricole peut être une parcelle couverte telle une serre ou une nurserie ou une parcelle ouverte telle qu'un champ ou une forêt.

L'application peut être réalisée par pulvérisation ou dépôt d'une suspension selon l'invention par exemple.

### EXEMPLES:

### Matériels :

Les phéromones sont soit achetées chez des fabricants industriels soit fabriquées par M2i Development selon des procédés connus. Dans le cas des produits synthétisés par M2i, leurs caractérisations sont validées par une analyse comparative avec un échantillon référent en chromatographie phase gazeuse.

Les modifiants de rhéologie acryliques sont des copolymères acryliques de type HASE fournis par la société Coatex. Ils sont préparés selon des méthodes connues de l'homme du métier au moyen d'un agent de transfert de chaînes du type mercaptan.

Le copolymèreHASE 1 utilisé pour les exemplifications suivantes est constitué de :
35,5 % en poids d'acide méthacrylique,
52,4 % en poids d'acrylate d'éthyle,
12% en poids d'un macromonomère de formule (I) dans laquelle m=30 et n=12.

Le suivi du relargage des phéromones est fait en étuve ventilée à 30°C selon deux méthodes soit par suivi de perte de poids des échantillons placés en étuve soit par suivi de la concentration résiduelle de la phéromone dans l'échantillon par chromatographie phase gaz, selon la méthodologie suivante.

### Méthodologie du suivi de relargage:

### - Principe

Une courbe de relargage est déterminée pour chaque phéromone afin de pouvoir évaluer l'évolution des concentrations de phéromone dans les échantillons par comparaison avec un échantillon étalon interne.

### - Modalités expérimentales

Mettre 3 g de produit formulé étalé en un film fin dans un contenant (boite de Petri). Répéter l'opération plusieurs fois. Mettre les boites de pétri dans une étuve à la température choisie, 30 °C dans les exemples ci-dessous. A un temps n, prélever une boite de Petri dans l'étuve puis analyser le résidu de phéromone dans l'échantillon.

### - Préparation d'échantillons analytiques

1 Echantillon à T=0 : Extraction liquide-liquide du latex avec HCl et MeCy
2 Echantillon à T=0+n : Idem

A un temps n, prélever un boite de Petri dans l'étuve et dissoudre son contenant avec de l'HCl (1N) et compléter à 20 ml. Transférer dans une fiole jaugée de 50 ml, rincer avec 10 ml d'HCl (1N) Ajouter 20 ml d'hexane et extraire.

### Protocole général de fabrication de microparticules contenant des phéromones :

- Constituants de la formulation :

| | |
|---|---|
| Phase aqueuse : | Modifiant rhéologique HASE |
| | H₂O |
| | NaOH 10% |
| Solution 1 | Cire/huile |
| | Phéromone |
| Solution 2 | H₃PO₄ (4%) |

- Mode opératoire :

La solution 1 est préparée en mettant à fondre, dans un réacteur double enveloppe muni d'une agitation mécanique (IKA) et d'une tige d'agitation standard type ancre ou Impeller, la cire et la phéromone. La température interne dans le réacteur doit être supérieure à la température de fusion de la cire.

Dans un second réacteur double enveloppe, muni d'une agitation mécanique (IKA) et d'une tige d'agitation standard type ancre ou Impeller, sous agitation, est préparée la phase aqueuse en chargeant l'eau, la soude et l'additif rhéologique. Ce mélange est porté à une température supérieure au point de fusion de la cire.

Lorsque la solution 1 est fondue, elle est ajoutée goutte à goutte à la phase aqueuse en 5' environ.

La solution 2 est alors ajoutée goutte à goutte en 15'. Le milieu est agité pendant 5' avant d'être refroidi et ramené à température ambiante.

La suspension de microparticules est alors vidangée du réacteur.

### Exemple 1 : Préparation de capsules de phéromone de la cochylis de la vigne (Eupoecilia ambiguella)

La préparation de capsules de la phéromone de la cochylis a été réalisée selon la procédure générale ci-dessus avec les quantités de réactifs présentées ci-dessous. Ces essais montrent que l'on peut modifier selon les besoins la teneur en phéromone dans les capsules.

| Essai | 1 | 2 | 3 |
|---|---|---|---|
| Ratio Cire d'abeille/Huile de tournesol | 10/30 | 10/30 | 10/30 |
| Teneur phéromone | 2% | 1% | 0.5% |
| Phéromone | 1.5g | 0.75g | 0.375g |
| HASE 1 | 3.75g | 3.75g | 3.75g |
| H₂O | 30.95g | 30.95g | 30.95g |
| NaOH (10%) | 1.45g | 1.45g | 1.45g |
| Cire d'abeille | 7.875g | 7.875g | 7.875g |
| Huile de tournesol | 22.91g | 23.66g | 24.04g |
| H₃PO₄ (4%) | 3.22g | 3.22g | 3.22g |

De la même manière, les ratios entre des constituants de la matrice, cire d'abeille et huile de tournesol dans nos exemples, peuvent être modifiés afin d'ajuster la viscosité de la matrice contenue dans les capsules.

| Essai | 1 | 4 | 5 | 6 |
|---|---|---|---|---|
| Ratio cire d'abeille/ huile de tournesol | 10/30 | 20/30 | 10/40 | 0/10010 |
| Teneur phéromone | 2% | 2% | 2% | 2% |
| Phéromone | 1.5g | 1.5g | 1.5g | 1.5g |
| HASE 1 | 3.75g | 3.75g | 3.75g | 3.75g |
| H₂O | 30.95g | 30.95g | 30.95g | 30.95g |
| NaOH (10%) | 1.45g | 1.45g | 1.45g | 1.45g |
| Cire d'abeille | 7.875g | 12.912g | 6.456g | 0g |
| Huile de tournesol | 22.91g | 17.87g | 24.324g | 30.78g |
| H₃PO₄ (4%) | 3.22g | 3.22g | 3.22g | 3.22g |

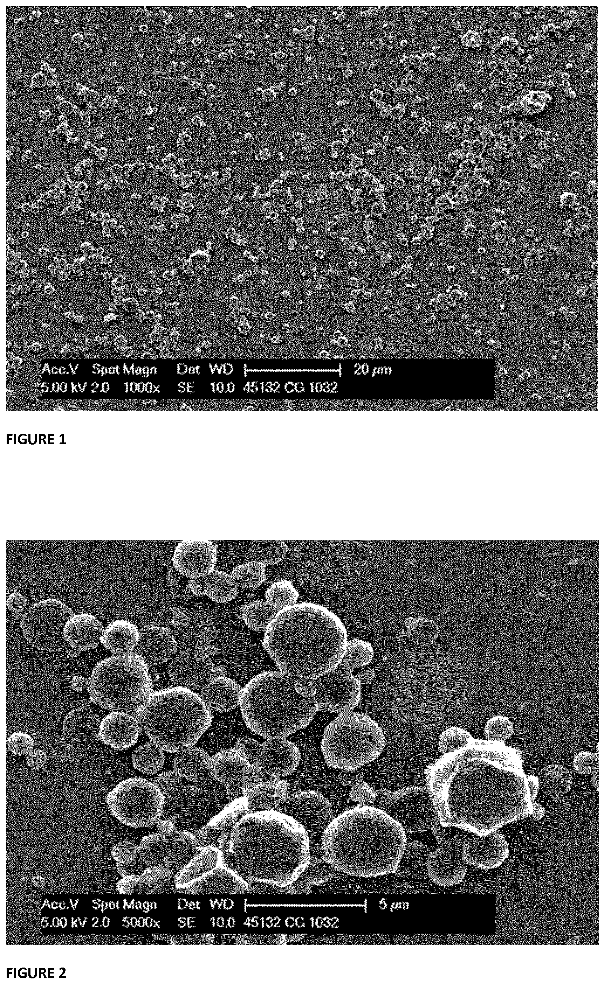

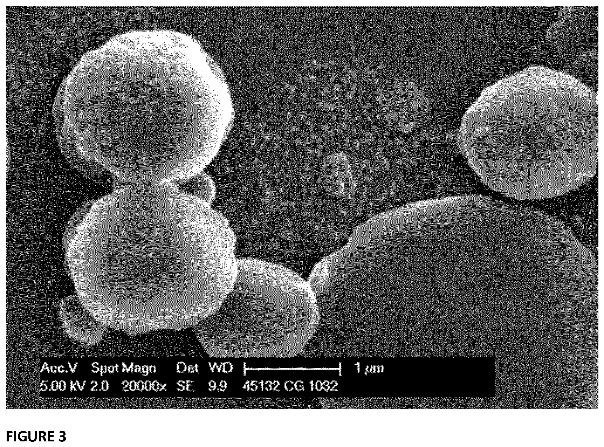

Les figures 1, 2 et 3 représentent des photographies obtenues avec un microscope électronique à balayage et sont une illustration des dimensions de particules obtenues : quelques microns dans cet exemple.

### Exemple 2 : préparation de capsules de phéromone de l'eudémis de la vigne (lobesia botrana)

La préparation de capsules de la phéromone de l'eudémis de la vigne a été réalisée selon la procédure générale ci-dessus avec les quantités de réactifs présentées dans le tableau suivant.

| Composants de la formulation | | Essai 7 |
|---|---|---|
| Phase aqueuse | HASE 1 | 3.7g |
| | H₂O | 30.9g |
| | NaOH (10%) | 1.4g |
| Solution 1 | Cire d'abeille | 7.8g |
| | Huile de tournesol | 22.9g |
| | Phéromone | 1.5g |
| Solution 2 | H₃PO₄ (4%) | 3.2g |

### Exemple 3 : Préparation d'une suspension vaporisable de capsules de phéromone de l'eudemys de la vigne

A une suspension de 2g de capsules contenant la phéromone de l'eudemys de la vigne, issue de l'exemple 2, est ajouté 30g d'eau. La préparation fluide est mise dans un flacon muni d'un pulvérisateur manuel. Cette suspension de particule peut être vaporisée en fines gouttelettes et ainsi former un film fin.

### Exemple 4 : Cinétiques de relargage

Ci-dessous est présentée la cinétique de relargage des essais 1, 2 et 3 de préparation de capsules de phéromone de la cochylis de la vigne décrits dans l'exemple 1.

| Temps en jour | Teneur résiduelle en phéromone en mg | | |
|---|---|---|---|
| | Essai 1 | Essai 2 | Essai 3 |
| 0 | 62,8 | 31,4 | 15,7 |
| 3 | 42,0 | 24,6 | 14,9 |
| 7 | | | 13,9 |
| 10 | 30,3 | 19,4 | |
| 14 | 26,4 | 17,4 | 12,1 |
| 17 | | 15,6 | 12,9 |
| 21 | 22,2 | 9,8 | 9,9 |
| 24 | 22,4 | | 8,5 |

| | Essai 1 | Essai 2 | Essai 3 |
|---|---|---|---|
| Taux moyen journalier de relargage (mg) | 1,75 | 0,9 | 0,28 |

Ces exemples montrent que les capsules fabriquées dans l'exemple 1 permettent de relarguer la phéromone sur des durées longues avec un taux journalier contrôlé par le ratio phéromone/masse de la capsule.

De la même façon, le relargage de phéromone des capsules issues des essais 4, 5 et 6 s'est effectué de manière contrôlée avec des taux journaliers compris entre 0,5 et 2 mg/jour de phéromone.

### Exemple 5 : Préparation d'une suspension de particules de phéromone de la sésamie du maïs

La préparation d'une suspension de la phéromone de la sésamie du maïs a été réalisée selon la procédure générale ci-dessus avec les quantités de réactifs présentées ci-dessous.

| Composants de la formulation | | Essai8 | Essai 9 | Essai 10 |
|---|---|---|---|---|
| Phase aqueuse | HASE 1 | 3.7g | 6,63 | 132,74 |
| | H₂O | 30.9g | 27,9 | 558,58 |
| | NaOH (10%) | 1.4g | 2,56 | 51,32 |
| Solution 1 | Cire d'abeille | 7.8g | 13,9 | 278,94 |
| | Huile de tournesol | 22.9g | 33,2 | 664,07 |
| | Phéromone | 1.5g | 10 | 200 |
| Solution 2 | H₃PO₄ (4%) | 3.2g | 5,7 | 113,98 |
| Masse totale suspension | | 56,5 | 100 | 2000 |

### Exemple 6 : Revêtement de particules obtenues dans l'exemple 5 et relargage de la phéromone

La suspension de particules 10 a été déposée sur des plaquettes en carton.

Le tableau ci-dessous représente les quantités résiduelles des deux composés (11Z)-hexadécényl acétate/ (11Z)-hexadécénol (9 :1) du mélange phéromonal dans le revêtement des particules au cours du temps.

| | COMPOSE MAJORITAIRE | COMPOSE MINORITAIRE |
|---|---|---|
| Temps en jour | Quantité de phéromone | Quantité de phéromone |
| 0 | 360,0 | 40,0 |
| 3 | 297,1 | 36,2 |
| 8 | 312,5 | 38,1 |
| 13 | 335,3 | 35,9 |
| 20 | 316,2 | 37,9 |
| 24 | 319,2 | 38,0 |
| 34 | 323,0 | 38,9 |
| 38 | 290,1 | 34,7 |
| 45 | 245,0 | 29,2 |

Ces données correspondent à un taux journalier moyen du composant majoritaire de 1,6mg/j et du composant minoritaire de 0,15mg/ jour, et montrent qu'au-delà de 45 jours, le relargage des deux composés est toujours efficace. De plus, il est à noter que le ratio des 2 composés présents reste quasiment constant au cours de l'étude.

### Exemple 7 : Préparation de capsules de phéromone du papillon de la chenille processionnaire

La préparation d'une suspension de la phéromone de la processionnaire du pin a été réalisée selon la procédure générale ci-dessus avec les quantités de réactifs présentées ci-dessous.

| Composants de la formulation | | Exemple 1 |
|---|---|---|
| Phase aqueuse | HASE 1 | 0.94g |
| | H₂O | 7.74g |
| | NaOH (10%) | 0.36g |
| Solution 1 | Cire d'abeille | 1.92g |
| | Huile de tournesol | 5.62g |
| | Phéromone | 0.23g |

Le tableau ci-dessous représente la quantité de phéromone résiduelle dans la matrice des particules au cours du temps.

| Durée en jour | Quantité de phéromone résiduelle en mg |
|---|---|
| 1 | **13,6** |
| 11 | **13,6** |
| 14 | **13,3** |
| 18 | **13,3** |
| 30 | **13,1** |

Cette étude montre qu'avec une charge de 3% de phéromone de la processionnaire, le taux de relargage est lent et permet de proposer des systèmes de traitement des forêts actifs sur 9 mois.

### Exemple 8 : Dépose de suspension de capsules au moyen de seringue plastique

Les capsules contenant la phéromone de la processionnaire du pin ont été conditionnées dans des seringues. Chaque seringue contient une dose de phéromone qui peut être déposée sur un support dans un piège à chenille processionnaire. Ceci procure un modèle simple de dépose de la phéromone dans un piège.

## Revendications

1. Particules comprenant une enveloppe solide entourant un cœur, **caractérisées en ce que** :
- l'enveloppe solide comprend au moins un copolymère acrylique,
- le cœur comprend un mélange de cire, d'huile et de phéromone,
- le cœur représente 90 à 99% en poids des particules,
et dans lesquelles le copolymère acrylique de l'enveloppe solide est choisi parmi les copolymères de type HASE et est **caractérisé en ce qu'**il contient :
- entre 30 et 40 % en poids d'acide méthacrylique,
- entre 45 et 60 % en poids d'acrylate d'éthyle,
- entre 5 % et 20 % en poids d'un macromonomère de formule générale (I) : 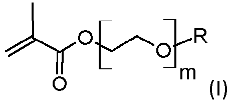
où m est un entier compris entre 1 et 40, de préférence compris entre 10 et 30 et où R un groupement carboné hydrophobe de formule générale CₙH₂ₙ₊₁ dans lequel n est
un entier compris entre 9 et 25, de préférence entre 10 et 20 et encore préférentiellement égal à 12,
le copolymère acrylique présentant des fonctions carboxylates qui sont neutralisées à un taux compris entre 50 et 100%, de préférence entre 65 et 100% et de manière encore préférentielle entre 75 et 100%.

2. Particules selon la revendication 1 **caractérisées en ce que** le cœur contient :
- 10 à 90 % en poids de cire, particulièrement de 60 à 80% en poids de cire,
- 10 à 90% en poids d'huile, particulièrement 8 à 35% en poids d'huile,
- 0.1 à 25 % en poids de phéromone, particulièrement de 0.5 à 20% en poids de phéromone,
- 0 à 0.8% en poids, particulièrement de 0.1 à 0.5% en poids de stabilisant.

3. Particules selon l'une des revendications 1 à 2 **caractérisées en ce que** la cire est choisie dans le groupe constitué par la cire d'abeilles, la cire de lanoline, et les cires d'insectes de Chine; la cire de riz, la cire de Carnauba, la cire de Candelila, la cire de jojoba, la cire d'Ouricurry, la cire d'Alfa, la cire de fibres de liège, la cire de canne à sucre, la cire du Japon et la cire de sumac, la cire de montan, les cires microcristallines et leurs mélanges.

4. Particules selon l'une des revendications 1 à 3 **caractérisées en ce que** l'huile selon l'invention est choisie dans le groupe constitué par l'huile de tournesol, l'huile d'arachide, l'huile de soja, l'huile de colza, l'huile de maïs, l'huile d'olive, l'huile de raisin, l'huile de noix, l'huile de lin, l'huile de palme, l'huile de coco, l'huile d'argan, l'huile d'avocat, l'huile d'amande, l'huile de noisette, l'huile de pistache, l'huile de riz, l'huile de coton, l'huile de germe de blé, l'huile de sésame et leurs mélanges.

5. Particules selon l'une des revendications 1 à 4 **caractérisées en ce que** Le stabilisant pourra être choisi dans le groupe constitué par le n-butyl-4-hydroxybenzoate (BHB), le tocophérol, la ter-butyl-hydroquinone (TBH), le n-propyl-gallate (PG), le t-butyl- hydroxyanisole (BHA), le para méthyl-hydroxy-benzoate (MHB), le N,N diétyl-toluamide (DT), le t-butyl-hydroxy-toluene (BHT) et l'α-thioglycérine (TG), les nitroxides et les alcoxyamines et leurs mélanges.

6. Particules selon l'une des revendications 1 à 5 **caractérisées en ce que** la phéromone est choisie parmi les phéromones sexuelles de lépidoptères.

7. Suspension aqueuse de particules selon l'une des revendications 1 à 6 **caractérisée en ce qu'**elle contient entre 1 et 70% en poids de particules, particulièrement entre 5 et 60% en poids de particules, plus particulièrement entre 10 et 50% en poids, plus particulièrement encore entre 20 et 50% en poids, et dont le pH est compris entre 2 et 7, de préférence entre 4 et 7.

8. Procédé de préparation d'une suspension de particules selon la revendication 7 comprenant les étapes suivantes :
a) préparation d'une phase grasse comprenant huile, cire et phéromone, et optionnellement un ou des stabilisants,
b) chauffage de la phase grasse à une température supérieure au point de fusion de la cire,
c) préparation d'une solution aqueuse comprenant le polymère acrylique, présentant un pH compris en 7.5 et 10 et chauffée à une température similaire à celle de la phase grasse,
d) mélange de la phase grasse dans la solution aqueuse pour former une dispersion de gouttelettes de phase grasse dans une phase aqueuse continue,
e) acidification à un pH compris entre 2 et 7, de préférence entre 4 et 7 afin d'obtenir la solidification du polymère acrylique.

9. Utilisation de particules selon l'une des revendications 1 à 6 ou d'une suspension selon la revendication 7 pour réaliser une pulvérisation sur un feuillage.

10. Utilisation de particules selon l'une des revendications 1 à 6 ou d'une suspension selon la revendication 7 pour leurrer les lépidoptères selon un protocole de piégeage ou selon un protocole de confusion sexuelle dans des cultures telles que la vigne, les grandes cultures, les cultures maraichères, les arbres fruitiers ou d'ornement.

11. Procédé de protection d'une parcelle agricole, en particulier une parcelle agricole cultivée, contre les lépidoptères comprenant l'application d'une composition comprenant des particules selon l'une des revendications 1 à 6.

12. Dispositif d'application d'une composition comprenant des particules selon l'une des revendications 1 à 6 ou une suspension selon la revendication 7, de type seringue préchargée avec ladite composition comprenant un cylindre et un piston.

## Patentansprüche

1. Partikel, die eine feste Hülle umfassen, die einen Kern umgibt, **dadurch gekennzeichnet, dass**:
- die feste Hülle mindestens ein Acryl-Copolymer umfasst,
- der Kern ein Gemisch aus Wachs, aus Öl und aus Pheromon umfasst,
- der Kern 90 bis 99 Gewichts-% der Partikel darstellt,
und wobei das Acryl-Copolymer der festen Hülle aus den Copolymeren vom Typ HASE ausgewählt ist und **dadurch gekennzeichnet ist, dass** es umfasst:
- zwischen 30 und 40 Gewichts-% Methacrylsäure,
- zwischen 45 und 60 Gewichts-% Ethylacrylat,
- zwischen 5 und 20 Gewichts-% eines Makromonomers mit der allgemeinen Formel (I): 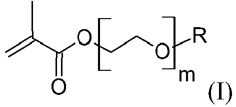
wobei m eine ganze Zahl zwischen 1 und 40, vorzugsweise zwischen 10 und 30, ist und wobei R eine hydrophobe Kohlenstoffgruppe mit der allgemeinen Formel CₙH₂ₙ₊₁ ist, in der n eine ganze Zahl zwischen 9 und 25, vorzugsweise zwischen 10 und 20 und bevorzugter gleich 12 ist, wobei das Acryl-Copolymer Carboxylat-Funktionen aufweist, die zu zwischen 50 und 100 %, vorzugsweise zwischen 65 und 100 %, bevorzugter zwischen 75 und 100 %, neutralisiert sind.

2. Partikel nach Anspruch 1, **dadurch gekennzeichnet, dass** der Kern enthält:
- 10 bis 90 Gewichts-% Wachs, insbesondere von 60 bis 80 Gewichts-% Wachs,
- 10 bis 90 Gewichts-% Öl, insbesondere von 8 bis 35 Gewichts-% Öl,
- 0,1 bis 25 Gewichts-% Pheromon, insbesondere von 0,5 bis 20 Gewichts-% Pheromon,
- 0 bis 0,8 Gewichts-%, insbesondere von 0,1 bis 0,5 Gewichts-%, Stabilisator.

3. Partikel nach einem der Ansprüche 1 bis 2, **dadurch gekennzeichnet, dass** das Wachs ausgewählt ist aus der Gruppe, die besteht aus Bienenwachs, Lanolinwachs und chinesischen Insektenwachsen; Reiswachs, Carnaubawachs, Candelillawachs, Jojobawachs, Ouricurry-Wachs, Alfa-Wachs, Korkfaserwachs, Zuckerrohrwachs, Japanwachs und Sumachwachs, Montanwachs, mikrokristallinen Wachsen und ihren Gemischen.

4. Partikel nach einem der Ansprüche 1 bis 3, **dadurch gekennzeichnet, dass** das erfindungsgemäße Öl aus der Gruppe ausgewählt ist, die besteht aus Sonnenblumenöl, Erdnussöl, Sojaöl, Rapsöl, Maisöl, Olivenöl, Traubenkernöl, Walnussöl, Leinöl, Palmöl, Kokosöl, Arganöl, Avocadoöl, Mandelöl, Haselnussöl, Pistazienöl, Reisöl, Baumwollsamenöl, Weizenkeimöl, Sesamöl und ihren Gemischen.

5. Partikel nach einem der Ansprüche 1 bis 4, **dadurch gekennzeichnet, dass** der Stabilisator ausgewählt werden kann aus der Gruppe, die besteht aus n-Butyl-4-hydroxybenzoat (BHB), Tocopherol, tert-Butylhydrochinon (TBH), n-Propylgallat (PG), t-Butylhydroxyanisol (BHA), para-Methylhydroxybenzoat (MHB), N,N-Diethyltoluamid (DT), t-Butylhydroxytoluol (BHT) und α-Thioglycerin (TG), Nitroxiden und Alkoxyaminen und ihren Gemischen.

6. Partikel nach einem der Ansprüche 1 bis 5, **dadurch gekennzeichnet, dass** das Pheromon ausgewählt ist aus Sexualpheromonen von Schmetterlingen.

7. Wässrige Suspension von Partikeln nach einem der Ansprüche 1 bis 6, **dadurch gekennzeichnet, dass** sie zwischen 1 und 70 Gewichts-% Partikel, insbesondere zwischen 5 und 60 Gewichts-% Partikel, genauer gesagt zwischen 10 und 50 Gewichts-%, noch genauer gesagt zwischen 20 und 50 Gewichts-%, umfasst und ihr pH-Wert zwischen 2 und 7, vorzugsweise zwischen 4 und 7, beträgt.

8. Verfahren zur Herstellung einer Suspension von Partikeln nach Anspruch 7, das die folgenden Schritte umfasst:
a) Herstellen einer Fettphase, die Öl, Wachs und Pheromon und wahlweise einen oder mehrere Stabilisatoren umfasst,
b) Erwärmen der Fettphase auf eine Temperatur über dem Schmelzpunkt des Wachses,
c) Herstellen einer wässrigen Lösung, die das Acryl-Polymer umfasst, einen pH-Wert zwischen 7,5 und 10 aufweist und auf eine Temperatur erwärmt wird, die derjenigen der Fettphase ähnlich ist,
d) Mischen der Fettphase in der wässrigen Lösung, um eine Dispersion von Tröpfchen der Fettphase in einer kontinuierlichen Wasserphase zu bilden,
e) Ansäuern auf einen pH-Wert zwischen 2 und 7, vorzugsweise zwischen 4 und 7, um die Erstarrung des Acryl-Polymers zu erhalten.

9. Verwendung von Partikeln nach einem der Ansprüche 1 bis 6 oder einer Suspension nach Anspruch 7 zum Ausführen einer Besprühung eines Laubs.

10. Verwendung von Partikeln nach einem der Ansprüche 1 bis 6 oder einer Suspension nach Anspruch 7 zum Ködern von Schmetterlingen gemäß einem Fangprotokoll oder gemäß einem Protokoll zur sexuellen Verwirrung in Kulturen wie Weinbau, Ackerbau, Gemüseanbau, Obst- oder Zierbäumen.

11. Verfahren zum Schutz einer landwirtschaftlichen Parzelle, insbesondere einer bewirtschafteten landwirtschaftlichen Parzelle, vor Schmetterlingen, das die Anwendung einer Zusammensetzung umfasst, die Partikel nach einem der Ansprüche 1 bis 6 umfasst.

12. Vorrichtung zur Anwendung einer Zusammensetzung, die Partikel nach einem der Ansprüche 1 bis 6 oder eine Suspension nach Anspruch 7 umfasst, vom Typ mit der Zusammensetzung vorgeladene Spritze, die einen Zylinder und einen Kolben umfasst.

## Claims

1. Particles comprising a solid shell surrounding a core, **characterized in that**:
- the solid shell comprises at least one acrylic copolymer,
- the core comprises a mixture of wax, oil and pheromone,
- the core represents 90-99% by weight of the particles,
and **in that** the acrylic copolymer of the solid shell is selected from HASE-type copolymers and is **characterized in that** it contains:
- between 30% and 40% by weight of methacrylic acid,
- between 45% and 60% by weight of ethyl acrylate,
- between 5% and 20% by weight of a macromonomer having the general formula (I): 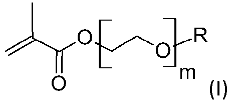
where m is an integer between 1 and 40, preferably between 10 and 30, and where R is a hydrophobic carbon group having the general formula CₙH₂ₙ₊₁ wherein n is an integer between 9 and 25, preferably between 10 and 20, and more preferably is equal to 12,
the acrylic copolymer having carboxylate functions that are neutralized at a rate between 50% and 100%, preferably between 65% and 100% and more preferably between 75% and 100%.

2. The particles as claimed in claim 1 **characterized in that** the core contains:
- 10% to 90% by weight of wax, particularly from 60% to 80% by weight of wax,
- 10% to 90% by weight of oil, particularly 8% to 35% by weight of oil,
- 0.1% to 25% by weight of pheromone, particularly from 0.5% to 20% by weight of pheromone,
- 0 to 0.8% by weight, particularly from 0.1% to 0.5% by weight, of stabilizer.

3. The particles as claimed in one of claims 1 to 2 **characterized in that** the wax is selected from the group consisting of beeswax, lanolin wax and Chinese insect waxes; rice wax, carnauba wax, candelilla wax, jojoba wax, ouricury wax, esparto wax, cork fiber wax, sugar cane wax, Japanese wax and sumac wax, montan wax, microcrystalline waxes and mixtures thereof.

4. The particles as claimed in one of claims 1 to 3 **characterized in that** the oil according to the invention is selected from the group consisting of sunflower oil, peanut oil, soybean oil, rapeseed oil, corn oil, olive oil, grape oil, walnut oil, linseed oil, palm oil, coconut oil, argan oil, avocado oil, almond oil, hazel nut oil, pistachio oil, rice oil, cotton seed oil, wheat germ oil, sesame oil and mixtures thereof.

5. The particles as claimed in one of claims 1 to 4 **characterized in that** the stabilizer may be selected from the group consisting of n-butyl-4-hydroxybenzoate (BHB), tocopherol, ter-butyl-hydroquinone (TBH), n-propyl-gallate (PG), t-butyl-hydroxyanisole (BHA), methyl parahydroxybenzoate (MHB), N,N-diethyl-toluamide (DT), t-butyl-hydroxy-toluene (BHT) and α-thioglycerin (TG), nitroxides and alkoxyamines and mixtures thereof.

6. The particles as claimed in one of claims 1 to 5 **characterized in that** the pheromone is selected from lepidopteran sex pheromones.

7. An aqueous suspension of particles as claimed in one of claims 1 to 6 **characterized in that** it contains between 1% and 70% by weight of particles, particularly between 5% and 60% by weight of particles, more particularly between 10% and 50% by weight, even more particularly between 20% and 50% by weight, and has a pH between 2 and 7, preferably between 4 and 7.

8. A process for preparing a suspension of particles as claimed in claim 7 comprising the following steps:
a) Prepare a fatty phase comprising oil, wax and pheromone, and optionally one or more stabilizers,
b) Heat the fatty phase to a temperature above the melting point of the wax,
c) Prepare an aqueous solution comprising the acrylic polymer, having a pH between 7.5 and 10 and heated to a temperature similar to that of the fatty phase,
d) Mix the fatty phase in the aqueous solution to form a dispersion of fatty-phase droplets in a continuous aqueous phase,
e) Acidify at a pH between 2 and 7, preferably between 4 and 7, in order to solidity the acrylic polymer.

9. Use of particles as claimed in one of claims 1 to 6 or a suspension as claimed in claim 7 to spray foliage.

10. Use of particles as claimed in one of claims 1 to 6 or a suspension as claimed in claim 7 to lure lepidopterans according to a trapping protocol or a sexual confusion protocol in crops such as grapevine, field crops, garden market crops, fruit trees or ornamental trees.

11. A process for protecting an agricultural plot, in particular a cultivated agricultural plot, against lepidopterans comprising applying a composition comprising particles as claimed in one of claims 1 to 6.

12. A device for applying a composition comprising particles as claimed in one of claims 1 to 6 or a suspension as claimed in claim 7, of syringe type preloaded with said composition comprising a barrel and a plunger.
